# EUROPEAN PATENT APPLICATION

(11) **EP 4 539 492 A1**
(43) Date of publication of application: **16.04.2025**
(21) Application number: 23820099.2
(22) Date of filing: 08.06.2023
(51) Int. Cl.: H04N 23/80, H04N 23/73, H04N 23/75, G01S 17/08

(54) **IMAGE ACQUISITION DEVICE AND METHOD**

(30) Priority: 09.06.2022 KR 20220070197
(71) Applicant: Hanwha Vision Co., Ltd., Seongnam-si, Gyeonggi-do 13488 (KR)
(72) Inventor: PARK, Dong Jin, Seongnam-si, Gyeonggi-do 13488 (KR); KWON, Young Sang, Seongnam-si, Gyeonggi-do 13488 (KR); KIM, Dae Bong, Seongnam-si, Gyeonggi-do 13488 (KR)
(74) Representative: Glawe, Delfs, Moll
(86) International application number: PCT/KR2023/007793
(87) International publication number: WO 2023/239164

(57) **Abstract**

An image acquisition device according to an embodiment of the present disclosure, in which a time point at which at least one frame constituting an image is acquired and a time point at which a distance to a shooting region is measured are distinguished may acquire a first frame, a second frame, and a third frame in succession, generate an image using the first frame, the second frame optionally used, and the third frame, and measure a distance to a shooting region in at least a portion of a section between a first time point at which acquisition of the first frame is completed and a fourth time point at which acquisition of the third frame begins.

## Description

### Technical Field

The present disclosure relates to an image acquisition device and a method in which a time point at which at least one frame constituting an image is acquired and a time point at which a distance to a shooting region is measured are distinguished.

### Background Art

Light used to measure a distance to a shooting region is generally light with a wavelength outside the visible light wavelength range because it is uncomfortable to a user if the light is observed with the naked eye.

However, light used to measure a distance, although not observed by the naked human eye, may affect an acquired image because the wavelength of the light belongs within the range of light wavelengths that may be accepted by image sensors such as image acquisition devices.

In particular, in a low-luminance environment in which the use of a commonly used infrared filter is excluded, the influence of the light for focus adjustment on an image increases even more, and thus the problem that the image acquisition device may not acquire an intended image may occur.

### Disclosure of Invention

### Technical Problem

The present disclosure is intended to solve the above-described problems and to minimize the influence of light for distance measurement on images.

### Solution to Problem

In an image acquisition device according to an embodiment of the present disclosure, in which a time point at which at least one frame constituting an image is acquired and a time point at which a distance to a shooting region is measured are distinguished, the image acquisition device acquires a first frame, a second frame, and a third frame in succession, generates an image using the first frame, the second frame optionally used, and the third frame, and measures a distance to a shooting region in at least a portion of a section between a first time point at which acquisition of the first frame is completed and a fourth time point at which acquisition of the third frame begins.

The image acquisition device may acquire the first frame, the second frame, and the third frame according to a first frame rate and a first shutter speed, generate an image using the first frame, the second frame, and the third frame, and measure a distance to the shooting region in each of a first section between the first time point and the second time point at which acquisition of the second frame begins and a second section between the third time point at which acquisition of the second frame is completed and the fourth time point.

The image acquisition device, if detecting an event required for a predetermined distance measurement, may acquire the first frame and the third frame according to a first aperture value, a first gain, a first frame rate, and a first shutter speed, acquire the second frame according to a second aperture value, a second gain, the first frame rate, and a second shutter speed, wherein the second shutter speed is faster than the first shutter speed, generate an image using the first frame, the second frame, and the third frame, and measure a distance to the shooting region in a third section between a third time point at which acquisition of the second frame is completed and the fourth time point.

The event may be one of events, such as an event in which a shooting direction of the image acquisition device changes, an event in which a shooting angle of the image acquisition device changes, an event in which an object appears in the image, and an event in which an object disappears in the image.

The image acquisition device may acquire the first frame, the second frame, and the third frame according to the first frame rate, generate an image using the first frame and the third frame, and measure a distance from the shooting region in a fourth section between the first time point and the fourth time point.

The image acquisition device, if detecting an event required for a predetermined distance measurement, may acquire the first frame and the third frame according to the first aperture value, the first gain, the first frame rate, and the first shutter speed, acquire the second frame according to the second aperture value, the second gain, the first frame rate, and the second shutter speed, wherein the second shutter speed is faster than the first shutter speed, generate a 1-1 frame by merging the first frame with the second frame by applying a predetermined weight to each of the first frame and the second frame, and generate a 3-1 frame by merging the third frame with the fourth frame following the third frame by applying a predetermined weight to each of the third frame and the fourth frame, and generate an image using the 1-1 frame and the 3-1 frame; and measure a distance to the shooting region in the third section between the third time point at which acquisition of the second frame is completed and the fourth time point.

The event may be one of events, such as an event in which a shooting direction of the image acquisition device changes, an event in which a shooting angle of the image acquisition device changes, an event in which an object appears in the image, and an event in which an object disappears in the image.

The image acquisition device may turn on a light source for distance measurement during at least a portion of the distance measurement process with respect to the shooting region.

An image acquisition method according to an embodiment of the present disclosure, in which a time point at which at least one frame constituting an image is acquired and a time point at which a distance to a shooting region is measured are distinguished, the image acquisition method including measuring the distance to the shooting region in at least a portion of a section between a first time point at which acquisition of the first frame is completed and a fourth time point at which acquisition of the third frame begins while acquiring a first frame, a second frame, and a third frame in succession, and generating an image using the first frame, the second frame selectively used, and the third frame.

The measuring the distance may include acquiring the first frame, the second frame, and the third frame according to the first frame rate and the first shutter speed; and measuring the distance to the shooting region in each of a first section between the first time point and a second time point at which acquisition of the second frame begins and a second section between a third time point at which acquisition of the second frame is completed and the fourth time point. Also, the generating of the image may include generating the image using the first frame, the second frame, and the third frame.

If an event required for a predetermined distance measurement is detected, the measuring the distance may include acquiring the first frame and the third frame according to a first aperture value, a first gain, a first frame rate, and a first shutter speed, acquiring the second frame according to a second aperture value, a second gain, the first frame rate, and a second shutter speed, wherein the second shutter speed is faster than the first shutter speed, and measuring the distance to the shooting region in a third section between a third time point at which acquisition of the second frame is completed and the fourth time point. The generating an image may include generating an image using the first frame, the second frame, and the third frame.

At this time, the event may be one of events, such as an event in which a shooting direction of the image acquisition device changes, an event in which a shooting angle of the image acquisition device changes, an event in which an object appears in the image, and an event in which an object disappears in the image.

The measuring may include acquiring the first frame, the second frame, and the third frame according to the first frame rate, and measuring the distance to the shooting region in a fourth section between the first time point and the fourth time point. Also, the generating of the image may include generating the image using the first frame and the third frame.

If an event required for a predetermined distance measurement is detected, the measuring may include acquiring the first frame and the third frame according to a first aperture value, a first gain, a first frame rate, and a first shutter speed, acquiring the second frame according to a second aperture value, a second gain, the first frame rate, and a second shutter speed, wherein the second shutter speed is faster than the first shutter speed, and measuring the distance to the shooting region in a third section between a third time point at which acquisition of the second frame is completed and the fourth time point. Also, the generating of an image may include generating a 1-1 frame by merging the first frame with the second frame by applying a predetermined weight to each of the first frame and the second frame, generating a 3-1 frame by merging the third frame with the fourth frame following the third frame by applying a predetermined weight to each of the third frame and the fourth frame, and generating the image using the 1-1 frame and the 3-1 frame.

At this time, the event may be one of events, such as an event in which a shooting direction of the image acquisition device changes, an event in which a shooting angle of the image acquisition device changes, an event in which an object appears in the image, and an event in which an object disappears in the image.

The measuring may include turning on a light source for distance measurement during at least a portion of the distance measuring process with respect to the above shooting area; an image acquisition method.

Other aspects, features, and advantages other than those described above will become apparent from the detailed description, claims, and drawings for carrying out the present disclosure below.

### Advantageous Effects of Invention

According to the present disclosure, the influence of light for distance measurement on an image may be minimized.

### Brief Description of Drawings

FIG. 1 is a diagram schematically illustrating the configuration of an image acquisition device 100 according to an embodiment.
FIG. 2 is a diagram for explaining a process of acquiring an image by the processor 110 according to an embodiment of the present disclosure.
FIG. 3 and FIG. 4 are diagrams for explaining a process of acquiring an image 310 by the image acquisition device 100 according to a first embodiment of the present disclosure and a configuration of the generated image 310.
FIG. 5 and FIG. 6 are diagrams for explaining a process of acquiring an image 320 by the image acquisition device 100 according to a second embodiment of the present disclosure and a configuration of the generated image 320.
FIG. 7 and FIG. 8 are diagrams for explaining a process of acquiring an image 330 by the image acquisition device 100 according to a third embodiment of the present disclosure and a configuration of the generated image 330. and
FIG. 9 and FIG. 10 are diagrams for explaining a process of acquiring an image 340 by the image acquisition device 100 according to a fourth embodiment of the present disclosure and a configuration of the generated image 340.

### Best Mode for Carrying out the Invention

An image acquisition device according to an embodiment of the present disclosure, in which a time point at which at least one frame constituting an image is acquired and a time point at which a distance from a shooting region is measured are distinguished, acquires a first frame, a second frame, and a third frame in succession, generates an image using the first frame, the selectively used second frame, and the third frame, and measures a distance from a shooting region in at least a portion of a section between a first time point at which acquisition of the first frame is completed and a fourth time point at which acquisition of the third frame begins.

### Mode for the Invention

As the present disclosure allows for various changes and numerous embodiments, particular embodiments will be illustrated in the drawings and described in detail in the written description The advantages, features, and methods of achieving the advantages may be clear when referring to the embodiments described below together with the drawings. However, the present disclosure may have different forms and should not be construed as being limited to the descriptions set forth herein.

Hereinafter, embodiments of the present disclosure will be described in detail with reference to the accompanying drawings, and when describing with reference to the drawings, identical or corresponding components will be assigned the same reference numerals and redundant description thereof will be omitted.

In the following embodiments, terms such as first and second are used not in a limiting sense but for the purpose of distinguishing one component from another component. In the following embodiments, the singular forms are intended to include the plural forms as well, unless the context clearly indicates otherwise. In the following embodiments, the terms "comprises" and/or "comprising," when used in this specification, specify the presence of stated features or constituent elements but do not preclude the presence or addition of one or more other features or constituent elements. In the drawings, sizes of components may be exaggerated or reduced for convenience of explanation. For example, because sizes and thicknesses of components in the drawings are arbitrarily illustrated for convenience of explanation, the following embodiments are not limited thereto.

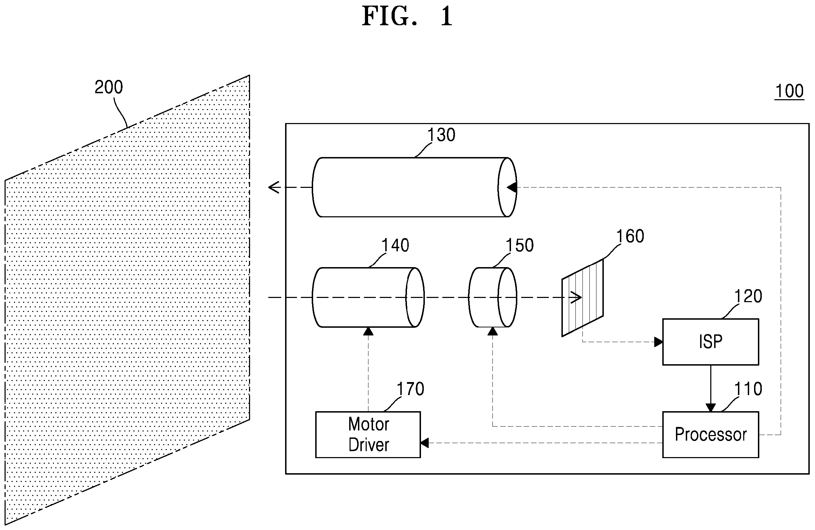

FIG. 1 is a drawing schematically illustrating a configuration of an image acquisition device 100 according to an embodiment of the present disclosure.

The image acquisition device 100 according to an embodiment of the present disclosure may acquire an image so that a time point at which at least one frame constituting the image is acquired and a time point at which a distance to a target object is measured are distinguished, thereby minimizing the influence of light for distance measurement on the image.

The image acquisition device 100 according to an embodiment of the present disclosure may include a processor 110, an internal service provider (ISP) 120, a light source 130, a lens group 140, a filter group 150, an image sensor 160, and a motor driver 170 as illustrated in FIG. 1.

The processor 110 according to an embodiment of the present disclosure may control components of the image acquisition device 100 so that the time point at which at least one frame constituting the image is acquired and the time point at which the distance to the shooting region 200 is measured are distinguished from each other. For example, in a process of acquiring the first, second, and third consecutive frames, the processor 110 may measure a distance to the shooting region 200 between the time point at which acquisition of the first frame is completed and the time point at which acquisition of the second frame begins. In addition, in a process of acquiring the first, second, and third consecutive frames, the processor 110 may measure a distance to the shooting region 200 in at least a portion of a section where the second frame is acquired and may exclude the second frame from the generation of an image. In addition, in the process of acquiring the first, second, and third consecutive frames, the processor 110 may measure the distance from the shooting region 200 in at least a portion of the section in which the second frame is acquired and may also generate one 1-1 frame by applying a predetermined weight to each of the first and second frames and merging them when generating an image. However, this is an example, and the idea of the present disclosure is not limited thereto.

Meanwhile, in the present disclosure, the 'processor' may denote a data processing device built into hardware, for example, having a physically structured circuit to perform a function expressed by code or commands included in a program. An example of the data processing device built into hardware may include a microprocessor, a central processing unit (CPU), a processor core, a multiprocessor, an application-specific integrated circuit (ASIC), a field programmable gate array (FPGA), etc., but the scope of the present disclosure is not limited thereto.

The processor 110 may be configured as a single processor, or may be configured as a plurality of processors that are divided into units of functions performed by the processor 110.

The ISP 120 and the image sensor 160 according to an embodiment of the present disclosure may convert light (or an optical signal) into an electrical signal. For example, the image sensor 160 is configured with a Charge Coupled Device (CCD) or a Complementary Metal-Oxide-Semiconductor (CMOS) and may convert light passing through the lens group 140 and/or the filter group 150 into an electrical signal. In addition, the ISP 120 may process an image (or an unprocessed RAW image) acquired by the image sensor 160 in a predetermined manner. For example, the ISP 120 may compress the image acquired by the image sensor 160 in a predetermined manner.

In an embodiment of the present disclosure, the ISP 120 and the image sensor 160 may be configured independently as shown in FIG. 1 or may be configured as an integrated component.

The lens group 140 and the motor driver 170 according to an embodiment of the present disclosure may perform operations for adjusting various parameters related to the image acquisition device 100 under the control by the processor 110.

For example, the lens group 140 and/or the motor driver 170 according to an embodiment of the present disclosure may adjust the position of at least one lens to adjust the focus according to the control by the processor 110. At this time, the lens group 140 may include at least one lens (or a single lens).

In addition, the lens group 140 and/or the motor driver 170 according to an embodiment of the present disclosure may adjust the opening degree of an aperture according to the control by the processor 110.

In addition, the lens group 140 and/or the motor driver 170 according to an embodiment of the present disclosure may adjust a zoom according to the control by the processor 110. However, the parameters described above are examples and the idea of the present disclosure is not limited thereto.

The filter group 150 according to an embodiment of the present disclosure is arranged between the lens group 140 and the image sensor 160 described above, and may adjust the wavelength composition of incident light.

In an embodiment of the present disclosure, the filter group 150 may include one or more filters, and a filter selected according to the control by the processor 110 may may be positioned between the lens group 140 and the image sensor 160. For example, the filter group 150 may include a first filter configured to reduce light of a second wavelength or greater, a second filter configured to reduce light of a first wavelength, and a third filter configured to pass light of all wavelengths, and any one of the three filters described above may be positioned between the lens group 140 and the image sensor 160 according to the control by the processor 110. In this case, the first wavelength may be a wavelength greater than the second wavelength.

The light source 130 according to an embodiment of the present disclosure may irradiate light of a first wavelength for the image acquisition device 100 to adjust the focus on the shooting region 200. At this time, the first wavelength may correspond to, for example, one of 650 nm, 905 nm, and 1,550 nm. However, this is an example and the spirit of the present disclosure is not limited thereto.

Meanwhile, in the present disclosure, the 'shooting region' may denote a region that is a target of image acquisition. For example, the shooting region may denote a space that includes an object that is a target of image acquisition.

Hereinafter, a process of the processor 110 acquiring an image in a low-luminance environment, i.e., an environment in which the operation of the light source 130 is required, will be mainly described.

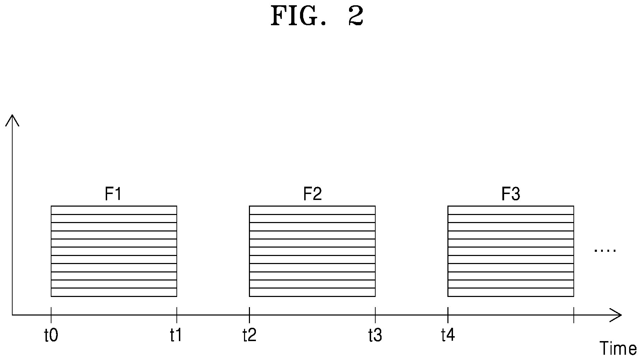

FIG. 2 is a diagram for explaining a process of acquiring an image by the processor 110 according to an embodiment of the present disclosure.

The processor 110 according to an embodiment of the present disclosure may acquire a first frame F1, a second frame F2, and a third frame F3 that are continuous. For example, the processor 110 may acquire the continuous first to third frames F1, F2, and F3 by using the ISP 120 and the image sensor 160 described above.

In addition, the processor 110 according to an embodiment of the present disclosure may generate an image by using the first frame F1, the selectively used second frame F2, and the third frame F3.

In this case, the fact that the second frame F2 is 'selectively' used may denote that the processor 110 may or may not use the second frame F2 in generating an image. For example, the processor 110 may generate an image using only the first frame F1 and the third frame, or may generate an image using all of the first frame F1, the second frame F2, and the third frame F3. In addition, the processor 110 may generate a single 1-1 frame (not shown) by applying a predetermined weight to each of the first frame F1 and the second frame F2 and merging the first frame F1 with the second frame F2. Of course, the processor 110 may generate an image using a plurality of frames after the third frame F3 together according to the method described above.

The processor 110 according to an embodiment of the present disclosure may measure a distance to the shooting region 200 in at least a portion of the section between the first time point t1 at which acquisition of the first frame F1 is completed and the fourth time point t4 at which acquisition of the third frame (F3) begins. At this time, the processor 110 according to an embodiment of the present disclosure may turn on the light source 130 for distance measurement during at least a section of the distance measurement process.

The 'distance' from the shooting region 200 measured by the processor 110 in the present disclosure may be used for various operations of the image acquisition device 100. For example, the processor 110 may use the measured distance for focus adjustment or may be used to calculate a distance to a specific object within the shooting region 200.

In addition, the processor 110 may use the measured distance for image analysis or object tracking. However, this is an example, and the idea of the present disclosure is not limited thereto. Hereinafter, the operation of the image acquisition device 100 according to various embodiments will be described.

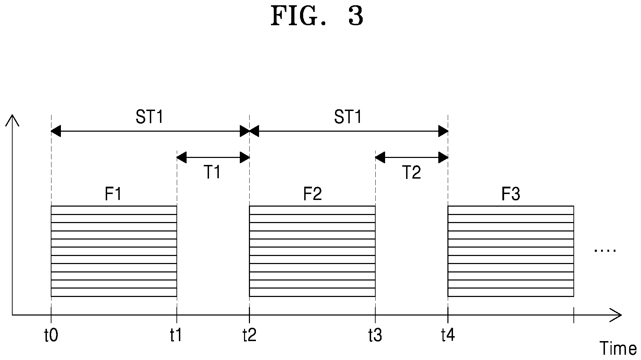

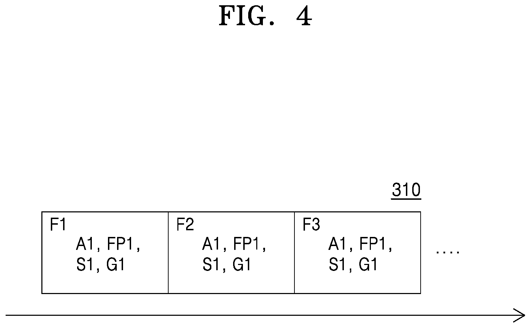

FIG. 3 and FIG. 4 are diagrams for explaining a process of acquiring an image 310 by the image acquisition device 100 according to an embodiment of the present disclosure and a configuration of the generated image 310.

The processor 110 of the image acquisition device 100 according to an embodiment of the present disclosure may acquire a first frame F1, a second frame F2, and a third frame F3 according to a first frame rate FP1 and a first shutter speed S1. At this time, the processor 110 may acquire the first to third frames F1, F2, and F3 consecutively using a first aperture value A1 and a first gain G1.

In addition, as illustrated in FIG. 4, the processor 110 may generate the image 310 using the first frame F1, the second frame F2, and the third frame F3, For example, the processor 110 may generate the image 310 by listing the first frame F1, the second frame F2, and the third frame F3 in time.

The processor 110 according to a first embodiment of the present disclosure may measure a distance from the shooting region 200 in each of the first section T1 between the first time point t1 and the second time point t2 and the second section T2 between the third time point t3 and the fourth time point t4. At this time, the first time point t1 may be the time point at which acquisition of the first frame F1 is completed, the second time point t2 may be the time point at which acquisition of the second frame F2 begins, the third time point t3 may be the time point at which acquisition of the second frame F2 is completed, and the fourth time point t4 may be the time point at which acquisition of the third frame F3 begins.

The processor 110 according to the first embodiment of the present disclosure may turn on the light source 130 for distance measurement in each of the first section T1 and the second section T2 where distance measurement is performed.

In the present disclosure, the acquisition start time and acquisition end time may be defined with respect to one frame. For example, in the case of a rolling shutter method, the time point at which acquisition of the first portion of the frame begins may correspond to the acquisition start time point, and the time point at which acquisition of the last portion ends may correspond to the acquisition end time point.

In the case of a global shutter method, the time point at which acquisition of the entire frame starts may correspond to the acquisition start time point, and the time point at which acquisition of the entire frame ends may correspond to the acquisition end time point.

In this case, a length between the acquisition start time and the acquisition end time may change depending on the shutter method. For example, the rolling shutter method may have a longer length between the acquisition start time and the acquisition end time than the global shutter method.

In this way, the image acquisition device 100 according to the first embodiment of the present disclosure may minimize the influence of light for distance measurement on an image by dividing the section in which the image is acquired (t0 to t1, t2 to t3, etc.) and the section in which the distance measurement is performed (t1 to t2, t3 to t4).

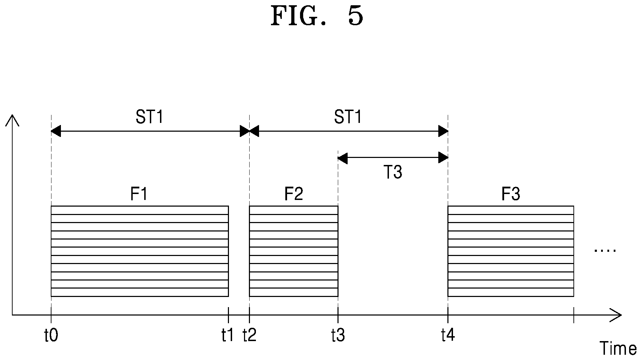

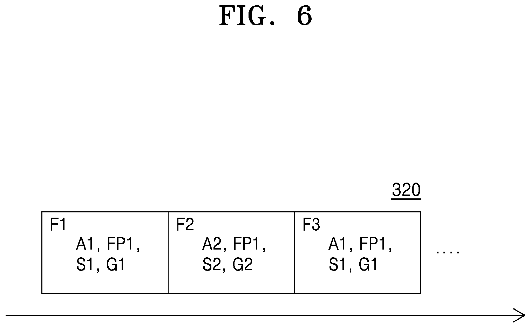

FIGS. 5 and 6 are diagrams for explaining a process of acquiring an image 320 by the image acquisition device 100 according to a second embodiment of the present disclosure and a configuration of the generated image 320.

The processor 110 of the image acquisition device 100 according to the second embodiment of the present disclosure may perform distance measurement only when an event is detected. In other words, the processor 110 may perform shooting with fixed parameters (e.g., shutter speed, aperture value, gain value, etc.) without performing the operation described below if an event is not detected.

Meanwhile, in the present embodiment, the 'event' may be set in various ways. For example, the event may be set as one of events, such as an event in which the shooting direction of the image acquisition device 100 changes, an event in which the shooting angle of the image acquisition device 100 changes, an event in which an object appears in the image, and an event in which an object disappears in the image. However, the types of the events are examples, and the idea of the present disclosure is not limited thereto. For convenience of explanation, the following description assumes that the event is detected before the acquisition start time t0 of the first frame F1.

When the processor 110 according to the second embodiment of the present disclosure detects an event, the first frame F1 and the third frame F3 may be acquired according to the first aperture value A1, the first gain G1, the first frame rate FP1, and the first shutter speed S1.

In addition, the processor 110 may acquire the second frame F2 according to a second aperture value A2, a second gain G2, the first frame rate FP1, and a second shutter speed S2.

At this time, the second shutter speed S2 may be faster than the first shutter speed S1. Therefore, within a time section ST1 that may be occupied by one frame according to the first frame rate FP1, the frame F2 acquired with the second shutter speed S2 may have a longer blank time section, which is a third section T3, than the frame F1 acquired with the first shutter speed S1. In addition, the second aperture value A2 may have a lower value than the first aperture value A1 and may allow more light to pass through, and the second gain G2 may have a greater value than the first gain G1 and may allow values that constitute the image to be amplified more.

In an optional embodiment of the present disclosure, the processor 110 may limit an adjustment range of at least one of the second aperture value A2, the second gain G2, and the second shutter speed S2 when an event is detected to within a preset threshold range. For example, the processor 110 may set a lower limit value of the second shutter speed S2, a lower limit value of the second aperture value A2, or a lower limit value of the second gain G2 when an event is detected so that each parameter does not decrease below the preset lower limit value.

In addition, as illustrated in FIG. 6, the processor 110 may generate an image 320 using the first frame F1, the second frame F2, and the third frame F3. For example, the processor 110 may generate the image 320 by listing the first frame F1, the second frame F2, and the third frame F3 in time.

The processor 110 according to the second embodiment of the present disclosure may measure the distance to the shooting region 200 in the third section T3 between the third time point t3 and the fourth time point t4. At this time, the third time point t3 may be the time point at which acquisition of the second frame F2 is completed, and the fourth time point t4 may be the time point at which acquisition of the third frame F3 begins.

The processor 110 according to the second embodiment of the present disclosure may turn on the light source 130 for distance measurement in the third section T3 at which distance measurement is performed.

In this way, the image acquisition device 100 according to the second embodiment of the present disclosure distinguishes between a section (t0 to t1, t2 to t3, etc.) in which an image is acquired and a section (t3 to t4) in which distance measurement is performed, however, an extended time section for distance measurement is provided when an event occurs, and thus, the influence of light for distance measurement on the image may be minimized while simultaneously performing accurate distance measurement.

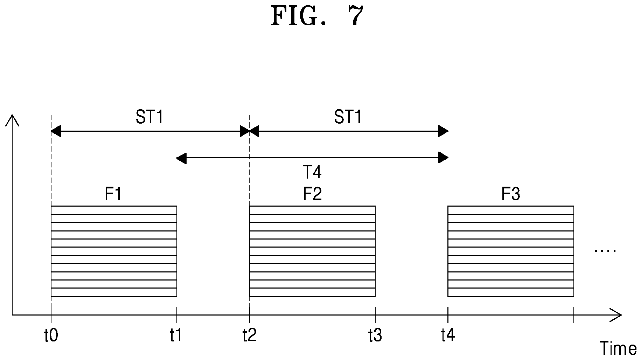

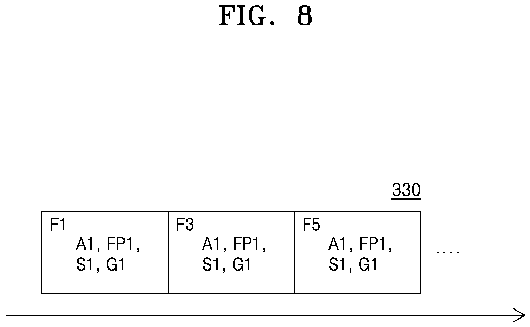

FIG. 7 and FIG. 8 are diagrams for explaining a process of acquiring an image 330 by the image acquisition device 100 according to a third embodiment of the present disclosure and a configuration of the generated image 330.

The processor 110 of the image acquisition device 100 according to the third embodiment of the present disclosure may acquire a first frame F1, a second frame F2, and a third frame F3 according to the first frame rate FP1. At this time, the processor 110 may acquire the first to third frames F1, F2, and F3 using the first shutter speed S1, the first aperture value A1, and the first gain G1.

In addition, as illustrated in FIG. 8, the processor 110 may generate the image 330 using only the first frame F1 and the third frame F1 without using the second frame F2. For example, the processor 110 may generate the image 330 by listing the first frame F1 and the third frame F3 in time.

The processor 110 according to the first embodiment of the present disclosure may measure a distance to the shooting region 200 in a fourth section T4 between the first time point t1 and the fourth time point t4. At this time, the first time point t1 may be the time point at which acquisition of the first frame F1 is completed, and the fourth time point t4 may be the time point at which acquisition of the third frame F3 begins.

The processor 110 according to the first embodiment of the present disclosure may turn on the light source 130 for distance measurement in the fourth section T4 where the distance measurement is performed.

In this way, the image acquisition device 100 according to the first embodiment of the present disclosure may minimize the influence of light for distance measurement on the image by excluding the frame acquired in an overlapping section from the image generation even when a portion of the section where the image is acquired overlaps with the section where the distance measurement is performed.

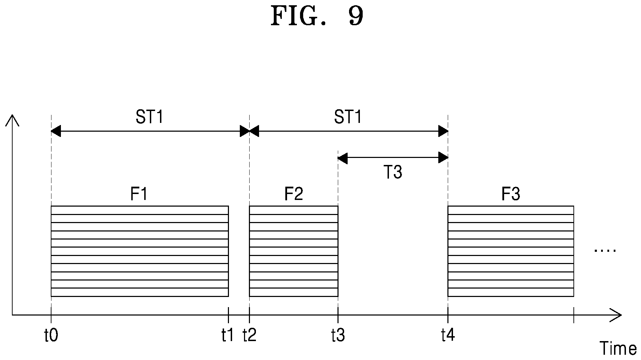

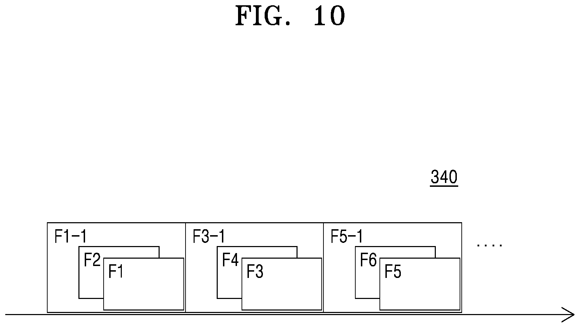

FIG. 9 and FIG. 10 are diagrams for explaining a process of acquiring an image 340 by the image acquisition device 100 according to a fourth embodiment of the present disclosure and a configuration of the generated image 340.

The processor 110 of the image acquisition device 100 according to a fourth embodiment of the present disclosure may perform distance measurement only when an event is detected, similar to the second embodiment. In other words, if the processor 110 does not detect an event, the processor 110 may perform shooting with fixed parameters (e.g., shutter speed, aperture value, gain value, etc.) without performing the operation described below.

As described above, the 'event' may be set in various ways. For example, the event may be set as one of events, such as an event in which the shooting direction of the image acquisition device 100 changes, an event in which the shooting angle of the image acquisition device 100 changes, an event in which an object appears in the image, and an event in which an object disappears in the image. However, the types of such events are examples, and the spirit of the present disclosure is not limited thereto. Hereinafter, for the convenience of explanation, it is assumed that the event is detected before the acquisition start time t0 of the first frame F1.

The processor 110 according to the fourth embodiment of the present disclosure may acquire the first frame F1 and the third frame F3 according to the first aperture value A1, the first gain G1, the first frame rate FP1, and the first shutter speed S1 when an event is detected.

In addition, the processor 110 may acquire the second frame F2 according to the second aperture value A2, the second gain G2, the first frame rate FP1, and the second shutter speed S2.

At this time, the second shutter speed S2 may be faster than the first shutter speed S1. Accordingly, within a time section ST1 that may be occupied by one frame according to the first frame rate FP1, the frame F2 acquired with the second shutter speed S2 may have a longer blank time section, which is a third section T3, than the frame F1 acquired with the first shutter speed S1. In addition, the second aperture value A2 may be a further less value than the first aperture value A1 and may allow more light to pass through, and the second gain G2 may be a further greater value than the first gain G1 and may allow values that constitute the image to be amplified more.

In an optional embodiment of the present disclosure, the processor 110 may limit an adjustment range of at least one of the second aperture value A2, the second gain G2, and the second shutter speed S2 when an event is detected to within a preset threshold range. For example, the processor 110 may set a lower limit value of the second shutter speed S2, a lower limit value of the second aperture value A2, or a lower limit value of the second gain G2 when an event is detected so that each parameter does not decrease below the preset lower limit value.

In addition, as illustrated in FIG. 10, the processor 110 may merge adjacent frames to generate the image 340. For example, the processor 110 may generate a 1-1 frame F1-1 constituting the image 340 by merging the first frame F1 with the second frame F2 by applying a predetermined weight to each of the first frame F1 and the second frame F2. Similarly, the processor 110 may generate a 3-1 frame F3-1 constituting the image 340 by merging the third frame F3 with the fourth frame (not shown) by applying a predetermined weight to each of the third frame F3 and the fourth frame (not shown).

The processor 110 according to the fourth embodiment of the present disclosure may measure a distance to the shooting region 200 in the third section T3 between the third time point t3 and the fourth time point t4. At this time, the third time point t3 may be the time point at which acquisition of the second frame F2 is completed, and the fourth time point t4 may be the time point at which acquisition of the third frame F3 begins.

The processor 110 according to the fourth embodiment of the present disclosure may turn on the light source 130 for distance measurement in the third section T3 where the distance measurement is performed.

In this way, the image acquisition device 100 according to the fourth embodiment of the present disclosure distinguishes the section (t0 to t1, t2 to t3, etc.) where the image is acquired and the section (t3 to t4) where the distance measurement is performed, but provides an extended time section for a distance measurement when an event occurs, thereby minimizing the influence of light for the distance measurement on the image and simultaneously performing an accurate distance measurement. In addition, the image acquisition device 100 according to the fourth embodiment of the present disclosure may improve a dynamic range of an image by generating a frame that constitutes an image by merging frames of different shooting conditions.

The embodiments according to the present disclosure described above may be implemented in the form of a computer program that may be executed through various components on a computer, and such a computer program may be recorded on a non-transitory computer-readable medium. At this time, the non-transitory computer-readable medium may include a magnetic medium such as a hard disk, a floppy disk, and a magnetic tape, an optical recording medium such as a CD-ROM and a DVD, a magnetooptical medium such as a floptical disk, and a hardware device specifically configured to store and execute program instructions, such as a ROM, RAM, flash memory, etc. In addition, the non-transitory computer-readable medium may include an intangible medium implemented in a form that may be transmitted on a network and, for example, may be a medium implemented in the form of software or an application that may be transmitted and distributed over a network.

The computer program may be one that is specifically designed and configured for the present disclosure or one that is known and available to those skilled in the art in the field of computer software. Examples of computer programs may include not only machine language code created by a compiler, but also high-level language code that may be executed by a computer using an interpreter, etc.

The specific implementations described in the present disclosure are examples and do not limit the scope of the present disclosure in any way. For brevity of the specification, descriptions of conventional electronic components, control systems, software, and other functional aspects of the systems may be omitted. Also, connections or connection members of lines between components shown in the drawings illustrate functional connections and/or physical or circuit connections, and the connections or connection members can be represented by replaceable or additional various functional connections, physical connections, or circuit connections in an actual apparatus. In addition, if there is no specific mention such as "essential," "important," etc., it may not be a component that is absolutely necessary for the application of the present disclosure.

Therefore, the spirit of the present disclosure should not be limited to the examples described above, and all scopes equivalent to or changed from the following claims as well as the scope of the present disclosure are considered to fall within the scope of the spirit of the present disclosure.

## Claims

1. An image acquisition device in which a time point at which at least one frame
constituting an image is acquired and a time point at which a distance to a shooting region is measured are distinguished
acquires a first frame, a second frame, and a third frame in succession;
generates an image using the first frame, the second frame optionally used, and the third frame; and
measures a distance to a shooting region in at least a portion of a section between a first time point at which acquisition of the first frame is completed and a fourth time point at which acquisition of the third frame begins.

2. The image acquisition device of claim 1, wherein
the image acquisition device acquires
the first frame, the second frame, and the third frame according to a first frame rate and a first shutter speed,
generates an image using the first frame, the second frame, and the third frame, and
measures a distance to the shooting region in each of a first section between the first time point and the second time point at which acquisition of the second frame begins and a second section between the third time point at which acquisition of the second frame is completed and the fourth time point.

3. The image acquisition device of claim 1, wherein
the image acquisition device,
if detecting an event required for a predetermined distance measurement,
acquires the first frame and the third frame according to a first aperture value, a first gain, a first frame rate, and a first shutter speed,
acquires the second frame according to a second aperture value, a second gain, the first frame rate, and a second shutter speed, wherein the second shutter speed is faster than the first shutter speed,
generates an image using the first frame, the second frame, and the third frame, and
measures a distance to the shooting region in a third section between a third time point at which acquisition of the second frame is completed and the fourth time point.

4. The image acquisition device of claim 3, wherein
the event is one of events, such as an event in which a shooting direction of the image acquisition device changes, an event in which a shooting angle of the image acquisition device changes, an event in which an object appears in the image, and an event in which an object disappears in the image.

5. The image acquisition device of claim 1, wherein
the image acquisition device
acquires the first frame, the second frame, and the third frame according to the first frame rate;
generates an image using the first frame and the third frame; and
measures a distance from the shooting region in a fourth section between the first time point and the fourth time point.

6. The image acquisition device of claim 1, wherein
the image acquisition device,
if detecting an event required for a predetermined distance measurement,
acquires the first frame and the third frame according to the first aperture value, the first gain, the first frame rate, and the first shutter speed;
acquires the second frame according to the second aperture value, the second gain, the first frame rate, and the second shutter speed, wherein the second shutter speed is faster than the first shutter speed;
generates a 1-1 frame by merging the first frame with the second frame by applying a predetermined weight to each of the first frame and the second frame, generates a 3-1 frame by merging the third frame with the fourth frame following the third frame by applying a predetermined weight to each of the third frame and the fourth frame, and generates an image using the 1-1 frame and the 3-1 frame; and
measures a distance to the shooting region in the third section between the third time point at which acquisition of the second frame is completed and the fourth time point.

7. The image acquisition device of claim 6, wherein
the event is one of events, such as an event in which a shooting direction of the image acquisition device changes, an event in which a shooting angle of the image acquisition device changes, an event in which an object appears in the image, and an event in which an object disappears in the image.

8. The image acquisition device of claim 1, wherein
the image acquisition device turns on a light source for distance measurement during at least a portion of the distance measurement process with respect to the shooting region.

9. An image acquisition method in which a time point at which at least one frame
constituting an image is acquired and a time point at which a distance to a shooting region is measured are distinguished, the image acquisition method comprising:
measuring the distance to the shooting region in at least a portion of a section between a first time point at which acquisition of the first frame is completed and a fourth time point at which acquisition of the third frame begins while acquiring a first frame, a second frame, and a third frame in succession; and
generating an image using the first frame, the second frame selectively used, and the third frame.

10. The image acquisition method of claim 9, wherein
the measuring the distance includes:
acquiring the first frame, the second frame, and the third frame according to the first frame rate and the first shutter speed; and
measuring the distance to the shooting region in each of a first section between the first time point and a second time point at which acquisition of the second frame begins and a second section between a third time point at which acquisition of the second frame is completed and the fourth time point,
wherein the generating of the image includes generating the image using the first frame, the second frame, and the third frame.

11. The image acquisition method of claim 9, wherein,
if an event required for a predetermined distance measurement is detected,
the measuring includes
acquiring the first frame and the third frame according to a first aperture value, a first gain, a first frame rate, and a first shutter speed;
acquiring the second frame according to a second aperture value, a second gain, the first frame rate, and a second shutter speed, wherein the second shutter speed is faster than the first shutter speed; and
measuring the distance to the shooting region in a third section between a third time point at which acquisition of the second frame is completed and the fourth time point,
wherein the generating an image includes generating an image using the first frame, the second frame, and the third frame.

12. The image acquisition method of claim 11, wherein
the event is one of events, such as an event in which a shooting direction of the image acquisition device changes, an event in which a shooting angle of the image acquisition device changes, an event in which an object appears in the image, and an event in which an object disappears in the image.

13. The image acquisition method of claim 9, wherein
the measuring includes:
acquiring the first frame, the second frame, and the third frame according to the first frame rate; and
measuring the distance to the shooting region in a fourth section between the first time point and the fourth time point,
wherein the generating of the image includes:
generating the image using the first frame and the third frame.

14. The image acquisition method of claim 9, wherein,
if an event required for a predetermined distance measurement is detected,
the measuring includes
acquiring the first frame and the third frame according to a first aperture value, a first gain, a first frame rate, and a first shutter speed;
acquiring the second frame according to a second aperture value, a second gain, the first frame rate, and a second shutter speed, wherein the second shutter speed is faster than the first shutter speed; and
measuring the distance to the shooting region in a third section between a third time point at which acquisition of the second frame is completed and the fourth time point,
wherein the generating of an image includes
generating a 1-1 frame by merging the first frame with the second frame by applying a predetermined weight to each of the first frame and the second frame;
generating a 3-1 frame by merging the third frame with the fourth frame following the third frame by applying a predetermined weight to each of the third frame and the fourth frame; and
generating the image using the 1-1 frame and the 3-1 frame.

15. The image acquisition method of claim 9, wherein
the event is one of events, such as an event in which a shooting direction of the image acquisition device changes, an event in which a shooting angle of the image acquisition device changes, an event in which an object appears in the image, and an event in which an object disappears in the image.

16. The image acquisition method of claim 9, wherein
the measuring includes turning on a light source for distance measurement during at least a portion of the distance measuring process with respect to the above shooting area; an image acquisition method.
